# EUROPEAN PATENT SPECIFICATION

(11) **EP 3 414 895 B1**
(45) Date of publication and mention of the grant of the patent: **25.09.2024**
(21) Application number: 17767195.5
(22) Date of filing: 09.03.2017
(51) Int. Cl.: H04N 21/254, H04N 21/266, H04N 21/45, H04N 21/4627, H04N 21/835

(54) **MODE MANAGEMENT OF CONTENT PLAYBACK DEVICE**
MODUSVERWALTUNG EINER INHALTSWIEDERGABEVORRICHTUNG
GESTION DE MODE DE DISPOSITIF DE LECTURE DE CONTENU

(30) Priority: 16.03.2016 US 201662309305 P; 15.11.2016 US 201615352447
(43) Date of publication of application: 19.12.2018
(73) Proprietor: Sony Group Corporation, Tokyo 108-0075 (JP); Sony Pictures Entertainment, Inc., Culver City, CA 90232 (US)
(72) Inventor: DIEHL, Eric, Culver California 90232 (US)
(74) Representative: D Young & Co LLP
(86) International application number: PCT/US2017/021671
(87) International publication number: WO 2017/160601

(56) References cited:
- US-A1- 2010 318 677
- US-A1- 2011 238 983
- US-A1- 2012 120 321
- US-A1- 2012 278 797
- US-A1- 2014 109 237

## Description

### CROSS-REFERENCE TO RELATED APPLICATIONS

This application claims the benefit of priority under 35 U.S.C. §119(e) of co-pending U.S. Provisional Patent Application No. 62/309,305, filed March 16, 2016, entitled "deprecated mode Management."

### BACKGROUND

### Field of the Disclosure

The present disclosure relates to modes of a content playback device, and more specifically, to managing the modes including a deprecated mode as defined in the appended claims.

### Background

Content owners may use a technical protection measure (TPM) to protect the content from unauthorized copying or use. However, when the TPM for a content playback device (or a class of devices) is circumvented or tampered with, there is an interest for the content owners to deal with the circumvention efficiently and wisely. For example, the content owners need to consider relative effectiveness and convenience, the cost of initial implementation and continued deployment, and consumer acceptance.

There are mainly two typical remedies for dealing with the circumvention. One is for the manufacturer of the circumvented device to fix the circumvention and issue a patch that updates the TPM with a new version. Another is to revoke the circumvented device(s) to prevent the revoked device from playing back the content.
US 2010/318677 A1 (BELLWOOD THOMAS A [US] ET AL) 16 December 2010 discloses content protection continuity through authorized chains of components.
US 2014/109237 A1 (NOVICK STEVEN M [US] ET AL) 17 April 2014 discloses application modes determined from previous and current states of a license.

### SUMMARY

Various aspects and features of the present disclosure are defined by the appended claims.

The present disclosure provides for managing the modes of a content playback device. The content playback device has multiple modes or states of operation to control content processing and content output. One mode is a deprecated mode that allows the content to be processed and output, but not in the same manner as in a normal or full feature mode. For example, in the normal mode of operation, the playback device outputs content at one resolution, but in the deprecated mode, the playback device outputs content at a resolution lower than the one resolution.

Other features and advantages of the present disclosure should be apparent from the present description which illustrates, by way of example, aspects of the disclosure.

### BRIEF DESCRIPTION OF THE DRAWINGS

The details of the present disclosure, both as to its structure and operation, may be gleaned in part by study of the appended drawings, in which like reference numerals refer to like parts, and in which:
FIG. 1 is a view of three operating modes (full, deprecated, and revoked) and defined transitions between the modes of a content playback device in accordance with one implementation of the present disclosure;
FIG. 2A is a functional block diagram of a content playback device in accordance with one implementation of the present disclosure;
FIG. 2B is a detailed functional block diagram of a content playback device in accordance with another implementation of the present disclosure;
FIG. 2C shows a status indicator, an SPM version, an SDM version, and an SRM version managed by a renewability control system;
FIG. 2D is a format for the system deprecation message, the system patched message, and the system revocation message in accordance with one implementation of the present disclosure;
FIG. 2E is a format for the system deprecation message, the system patched message, and the system revocation message in accordance with an alternative implementation of the present disclosure;
FIGS. 3A and 3B are flow diagrams illustrating a process for handling messages by the renewability control system when the device is in a full mode in accordance with one implementation of the present disclosure;
FIGS. 4A and 4B are flow diagrams illustrating a process for handling messages by the renewability control system when the device is in a deprecated mode in accordance with one implementation of the present disclosure;
FIG. 5 is a flow diagram illustrating a process for managing status indicator and control indicator by the renewability control system to determine automatic transition to a full mode in accordance with one implementation of the present disclosure; and
FIGS. 6A and 6B are flow diagrams illustrating a process for handling messages by the renewability control system when the device is in a full mode in accordance with the alternative implementation of the present disclosure.

### DETAILED DESCRIPTION

As described above, in the case of circumvention, the manufacturer of the circumvented device can fix the circumvention and issue a patch that updates the TPM with a new version, or revoke the circumvented device(s) to prevent the revoked device from playing back the content. However, revocation is an extreme measure that may not be beneficial to the content owner or the licensing authority. Although updating the TPM (e.g., with a patch) is a preferred solution, there are issues with this remedy. For example, the circumvented device(s) may not support the TPM update, or not all circumvented devices of a class may update the TPM. Thus, the TPM update remedy may not remove all circumvented TPMs from operating in the field. Therefore, it may be difficult to avoid the revocation remedy.

Certain implementations of the present disclosure provide alternative solutions which steer the consumers of the content toward "renewability" remedy, which provides for putting the device in a "deprecated" mode until it is verified that the TPM update has been made to the device. In one implementation, the term "deprecated mode" as used in this disclosure refers to a depreciated or degraded mode in which the quality of the content is not at the "full" mode or mode at which a complete set of features of the content are available. Once the TPM update verification is made, the device will be "renewed" back to the "full" mode from the deprecated mode. After reading these descriptions, it will become apparent how to implement the disclosure in various implementations and applications. However, although various implementations of the present disclosure will be described herein, it is understood that these implementations are presented by way of example only, and not limitation. As such, this detailed description of various implementations should not be construed to limit the scope or breadth of the present disclosure.

In one implementation, a content playback device uses modes, including a deprecated mode, to manage content processing, playback operations, and output. In this implementation, the modes of the device are controlled based on messaging from an external source, such as messages received by the device through a network from a licensing authority server.

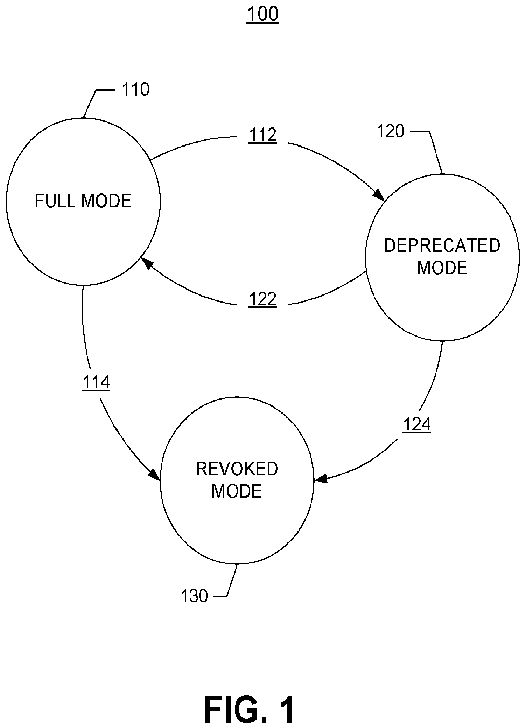

FIG. 1 is a view 100 of three operating modes (full, deprecated, and revoked) and defined transitions between the modes of a content playback device in accordance with one implementation of the present disclosure. In the illustrated implementation of FIG. 1, the initial state of the device is a full mode. In the full mode, the device provides a first set of features. For example, in this mode, the device may render or transfer Ultra highdefinition (UHD) content when authorized by the TPM. In the deprecated mode, the device provides a set of features which is reduced in features from the first set of features. For example, the device may render or transfer only down-converted content (e.g., down converted from the UHD) when authorized by the TPM. This reduction of features occurs even if the TPM authorizes the full set of features. In the revoked mode, the device disables all features, which means that the device may not render or transfer any content.

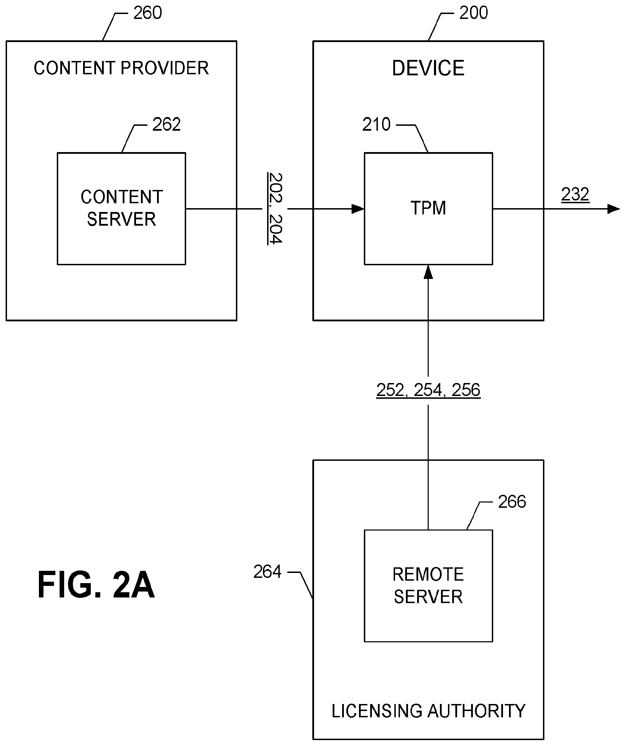

FIG. 2A is a functional block diagram of a content playback device 200 in accordance with one implementation of the present disclosure. In the illustrated implementation of FIG. 2A, the device 200 implementing a TPM 210, among others, receives content (e.g., video data) from a content server 262 operated by a content provider 260. The device 200 also receives messages from a remote server 266 operated by a licensing authority 264 to control the modes and operation of the device 200. The licensing authority 264 also manages the TPM 210.

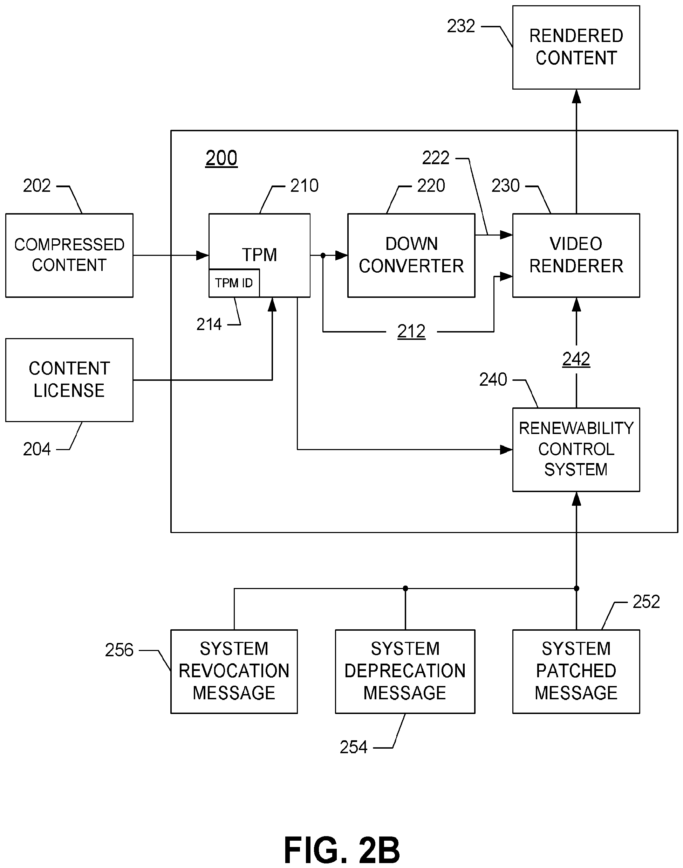

In one implementation, when the licensing authority 264 detects a circumvention of the TPM 210 and determines that the TPM 210 cannot be renewed/updated to deal with the circumvention (or will not renew/update according to defined criteria), the licensing authority 264 commands a transition 112 to switch from the full mode 110 to the deprecated mode 120 (see FIG. 1). The command to transition to the deprecated mode 120 is accomplished by sending a system deprecation message 254 (see FIG. 2B) to the device 200 that informs the device 200 of its new mode. The licensing authority 264 also determines if the circumvention of the TPM 210 has occurred at a particular device or for a class of devices (e.g., a particular model or manufacturer).

When the breached TPM 210 is renewed, the licensing authority 264 may command the cured device 200 to switch from the deprecated mode 120 back to the full mode 110. This command generates the transition 122 to switch from the deprecated mode 120 back to the full mode 110 (see FIG. 1). The command to transition to the full mode 110 is accomplished by a system patched message 252 (see FIG. 2B) that informs the device 200 of its new mode.

The transition 122 from the deprecated mode 120 to the full mode 110 may be triggered by an event other than the reception of a proper system patched message 252. In this case, the breached TPM 210 has a current version number (which is the original version number of the TPM). The device 200 also includes a renewability control system (RCS) (see FIG. 2B for details), which keeps in a secure memory its own version number of the TPM. This version number may be referred to as an "RCS" version number. Thus, the system deprecation message 254 may include, in addition to a list of impacted devices with breached TPMs, the RCS version number of the TPM 210. In one implementation, each device of the "list of impacted devices with breached TPMs" refers to a specific device with a TPM that has been circumvented. In another implementation, each device of the "list of impacted devices with breached TPMs" refers to a specific type of devices with at least one of the devices having the circumvented TPM. Thus, in this implementation, the TPM of the specific device may have been circumvented or the TPM of another device that is of the same specific type as the specific device may have been circumvented. In another implementation, each device of the "list of impacted devices with breached TPMs" refers either to a specific device with a TPM that has been circumvented or to a specific type of devices with the TPM circumvented.

In one implementation, the RCS version number is greater than the current version number of the breached TPM. Once cured, the renewed TPM 210 has the current version number at least as great as the RCS version number. Thus, in the alternative implementation, the device 200 monitors the progression of the current version number of the TPM 210. When, the current version number of the TPM 210 of the device 200 becomes greater or equal to the RCS version number from the latest system deprecation message 254, the device 200 automatically initiates the transition 122 to return to the full mode 110. The RCS version number is set to null when the device 200 leaves the factory.

In some implementations, the licensing authority 264 may command the device 200 to switch to the revoked mode 130. The command to transition to the revoked mode 130 generates either the transition 114 if the device 200 is in the full mode 110 or the transition 124 if the device 200 is in the deprecated mode 120 (see FIG. 1). The command to transition to the revoked mode is accomplished by a system revocation message 256 (see FIG. 2B) that informs the device 200 of its new mode. In one implementation, the command to transition to the revoked mode is issued when the licensing authority determines that the circumvention of the TPM 210 is permanent.

FIG. 2B is a detailed functional block diagram of a content playback device 200 in accordance with another implementation of the present disclosure. In FIG. 2B, the device 200 receives compressed content 202 and a content license 204 as inputs, and outputs a rendered content 232 (e.g., through a protected link such as High-bandwidth Digital Content Protection (HDCP)). In one implementation, the delivered compressed content 202 may have characteristics including 4K resolution, High Dynamic Range (HDR), and wide gamut color space (i.e., REC2020). However, the quality and resolution of the rendered/output content 232 may be varied according to the current mode of the device 200 as defined in Table 1 shown below. For example, when the device 200 is in a full mode, the quality and resolution of the rendered content 232 is kept at the same level as the delivered compressed content 202. In contrast, when the device 200 is in a deprecated mode, the quality and resolution of the rendered content 232 may be degraded to the HD resolution, Simple Dynamic Range (SDR), and REC709 color space. Further, when the device is in a revoked mode, no rendered content is output.

**Table 1: Output content**

| Mode | Quality of Rendered Content |
|---|---|
| full mode | 4K, HDR |
| deprecated mode | High Definition 1080 (HD), Simple Dynamic Range (SDR), and color space REC709 |
| revoked mode | No output |

In the illustrated implementation of FIG. 2B, the device 200 includes a TPM 210, a downconverter 220, a video renderer 230, and a renewability control system 240. In other implementations, the device 200 may include additional elements. Some elements (e.g., memory) are not shown for clarity.

The TPM 210 manages the rights of the content and is configured to protect the content from unauthorized copying or use. The TPM 210 has a current version number which is common to every instance of the TPM 210, and a unique TPM identifier 214 that is unique for each TPM 210 instance. The TPM 210 receives and handles the content license 204 that defines the usage rights for the compressed content 202.

The compressed content 202 is often encrypted. If the user is authorized (e.g., by the content provider 260 in FIG. 2A when the user presents valid user identifier and password) to consume (e.g., download, play, copy, etc.) the content, the TPM 210 decrypts the encrypted compressed content 202 to generate the decrypted compressed content 212.

The down converter 220 down converts the decrypted compressed content 212 into down-converted content 222. In one implementation, the quality of the down-converted content 222 is set at 1080 HD and SDR, which is lower than 4K and HDR provided for the decrypted compressed content 212 (i.e., non-down-converted content). In other implementations, the quality of the down-converted content 22 can be set differently. For example, the resolution can be set at a lower resolution than HD and a lower dynamic range than SDR. In another example, the quality of characteristics of the content other than resolution and dynamic range (e.g., frame rate, time length, etc.) can be degraded. In a further example, the down-converted content 222 can be degraded in quality and/or added advertisements.

The video renderer 230 receives and decompresses the decrypted compressed content 212 or the down-converted content 222 depending on a control indicator 242 from the renewability control system 240 to produce the rendered content 232. For example, if the control indicator 242 is equal to 2 (e.g., the device is in a full mode), then the video renderer 230 uses as input the decrypted compressed content 212. In contrast, if the control indicator 242 is equal to 1 (e.g., the device is in a deprecated mode), then the video renderer 230 uses as input the down-converted content 222. If the control indicator 242 is equal to 3 (e.g., the device is in a revoked mode), then the video renderer 230 does not render any content.

The renewability control system 240 receives system messages including a system patched message (SPM) 252, a system deprecation message (SDM) 254, and system revocation message (SRM) 256. In one implementation, the system messages 252, 254, 256 are stored in a secure memory in the renewability control system 240. The renewability control system 240 determines and manages the operating mode of the device 200 based on the received system messages 252, 254, 256. The renewability control system 240 also holds in a secure memory the RCS version number, which is set to null when the device leaves the factory.

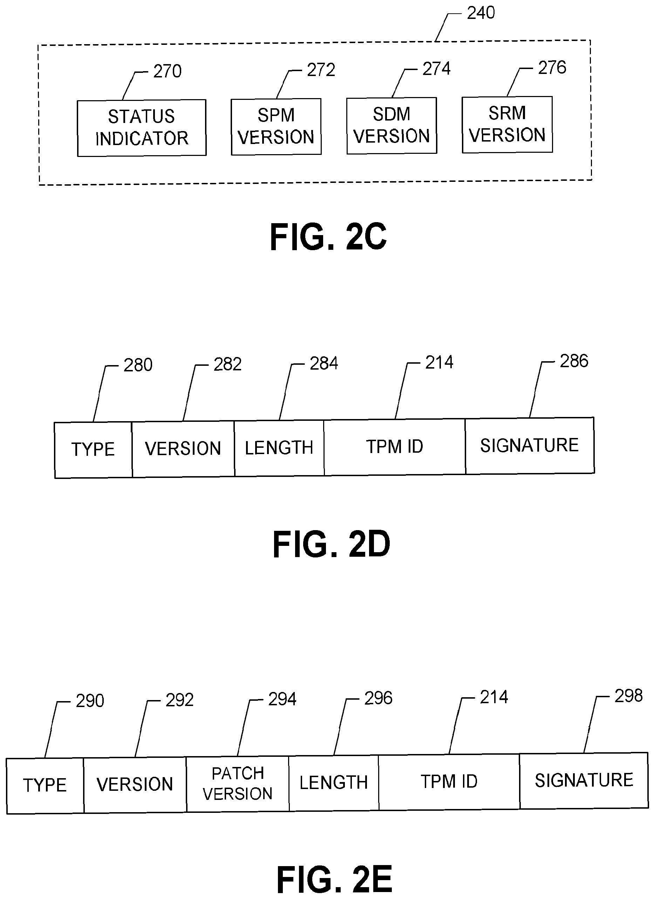

In one implementation, the renewability control system 240 also manages a status indicator 270, an SPM version 272, an SDM version 274, and an SRM version 276 (see FIG. 2C). The initial value of the status indicator 270 is 2 (e.g., a full mode). The status indicator 270 can also have value 1 (i.e., a deprecated mode) or 3 (i.e., a revoked mode). The renewability control system 240 may reproduce and send the current value of the status indicator 270 as the control indicator 242 to the video renderer 230. The initial values of the SPM version 272, the SDM version 274, and the SRM version 276 may be set to null. At each boot, the renewability control system 240 requests the Unique TPM Identifier 214 from its TPM 210.

FIG. 2D is a format for the system deprecation message 254, the system patched message 252, and the system revocation message 256 in accordance with one implementation of the present disclosure. Thus, the format for all three messages is same.

In the illustrated implementation of FIG. 2D, the type 280 of the message is a one-byte field that defines the type of message. In one example, the system deprecation message 254 is designated with type 1, the system patched message 252 is designated with type 2, and the system revocation message 256 is designated with type 3. The version 282 of the message is a two-byte field. This incremental value defines the current version of the message. The initial value is set at 1. Then, every time the licensing authority 264 issues a new version of the corresponding type of message, the version 282 is incremented by 1. The length 284 is a three-byte field that defines the number of unique TPM identifier (TPM ID) 214. The signature 286 is the digital signature of all the previous bytes of the message. For example, the licensing authority 264 signs the message using its 256-bit private key using Elliptic Curve Cryptography (ECC).

At a certain time interval (e.g., once a day), the renewability control system 240 attempts to contact the remote server 266 residing within the licensing authority 264 and requests the current system deprecation message 254, the system patched message 252, and the system revocation message 256. In one implementation, this request and the transfer of messages can use a secure protocol such as https. If after a set period of time (e.g., one week), the renewability control system 240 is not able to contact the remote server 266 and to receive a properly signed message, the device 200 will not play back any content until the renewability control system 240 is able to successfully contact the remote server 266 and receive a properly signed and up-to-date system messages. This will enable proper handling of the attempted denial-of-service attacks on the distribution of messages.

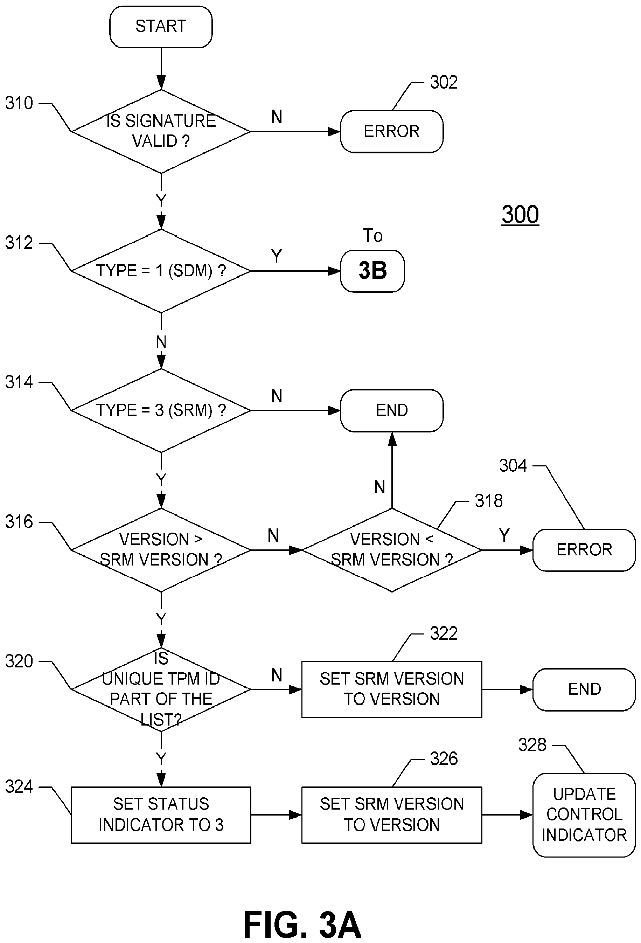

When the renewability control system 240 is able to receive the system messages, the renewability control system 240 performs the operations as illustrated in FIGS. 3A-6B based on the current mode as indicated by the status indicator 270. In one implementation, when the device 200 is in a revoked mode 130, the renewability control system 240 rejects the message which can help with handling replay attacks using older messages.

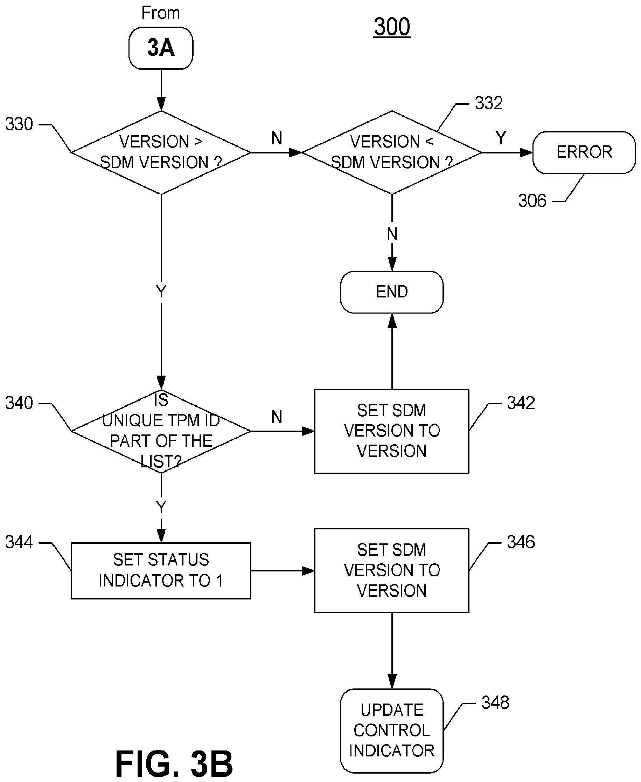

FIGS. 3A and 3B are flow diagrams illustrating a process 300 for handling messages by the renewability control system 240 when the device is in a full mode 110 (i.e., status indicator 270 is equal to 2) in accordance with one implementation of the present disclosure.

In the illustrated embodiment of FIG. 3A, a determination is made, at block 310, whether the signature 286 is valid. In one implementation, the renewability control system 240 verifies the signature 286 by using the public key of the signing key of the licensing authority 264. This verification is a typical digital signature process. If the verification (at block 310) fails, the renewability control system 240 issues an error message (at block 302) and rejects the message. The renewability control system 240 may attempt to reload the message to verify whether there was a transmission error that altered the received message.

Otherwise, if signature 286 is valid, a determination is made, at blocks 312 and 314, of the type 280 of the message. If the message type 280 is determined, at block 312, to be equal to 1 (i.e., the system deprecation message 254), the process is directed to block 330 of FIG. 3B. Otherwise, if the message type 280 is determined to be equal to 3 (i.e., the system revocation message 256), at block 314, the message version number 282 is compared to the SRM version number 276, at blocks 316 and 318. If the message version number 282 is determined to be greater than the SRM version number 276, at block 316, a check is made, at block 320, to determine if the unique TPM ID 214 is in the list of impacted devices with breached TPMs. Otherwise, if the message version number 282 is determined to be less than the current SRM version number 276 stored by the renewability control system 240, at block 318, then an error message is generated, at block 304, to indicate that the message is obsolete. Further, if the message version number 282 is determined to be equal to the SRM version number 276 (i.e., not greater at 316 and not less at 318), at block 318, then the process ends.

If the check made at block 320 indicates that the unique TPM ID 214 is not in the list of impacted devices with breached TPMs, then the SRM version number 276 is set to the message version number 282, at block 322, and the process ends. Otherwise, if the check made at block 320 indicates that the unique TPM ID 214 is in the list of impacted devices with breached TPMs, then the status indicator 270 is set to 3, at block 324, the SRM version number 276 is set to the message version number 282, at block 326, and the control indicator 242 is updated, at block 328. As stated above, in one implementation, the value of the control indicator 242 tracks the value of the status indicator 270.

Referring back to block 312, in which the message type 280 is determined to be equal to 1 (i.e., the system deprecation message 254), the process is directed to block 330 of FIG. 3B. Thus, in the illustrated embodiment of FIG. 3B, a comparison is made, at block 330, whether the message version number 282 is greater than the SDM version number 274. If the message version number 282 is determined to be greater than the SDM version number 274, at block 330, a check is made, at block 340, to determine if the unique TPM ID 214 is in the list of impacted devices with breached TPMs. Otherwise, if the message version number 282 is determined to be less than the current SDM version number 274 stored by the renewability control system 240, at block 332, then an error message is generated, at block 306, to indicate that the message is obsolete. Further, if the message version number 282 is determined to be equal to the SDM version number 274 (i.e., not greater at 330 and not less at 332), at block 332, then the process ends.

If the check made at block 340 indicates that the unique TPM ID 214 is not in the list of impacted devices with breached TPMs, then the SDM version number 274 is set to the message version number 282, at block 342, and the process ends. Otherwise, if the check made at block 340 indicates that the unique TPM ID 214 is in the list of impacted devices with breached TPMs, then the status indicator 270 is set to 1 (i.e., deprecated mode), at block 344, the SDM version number 276 is set to the message version number 282, at block 346, and the control indicator 242 is updated, at block 348. As stated above, in one implementation, the value of the control indicator 242 tracks the value of the status indicator 270.

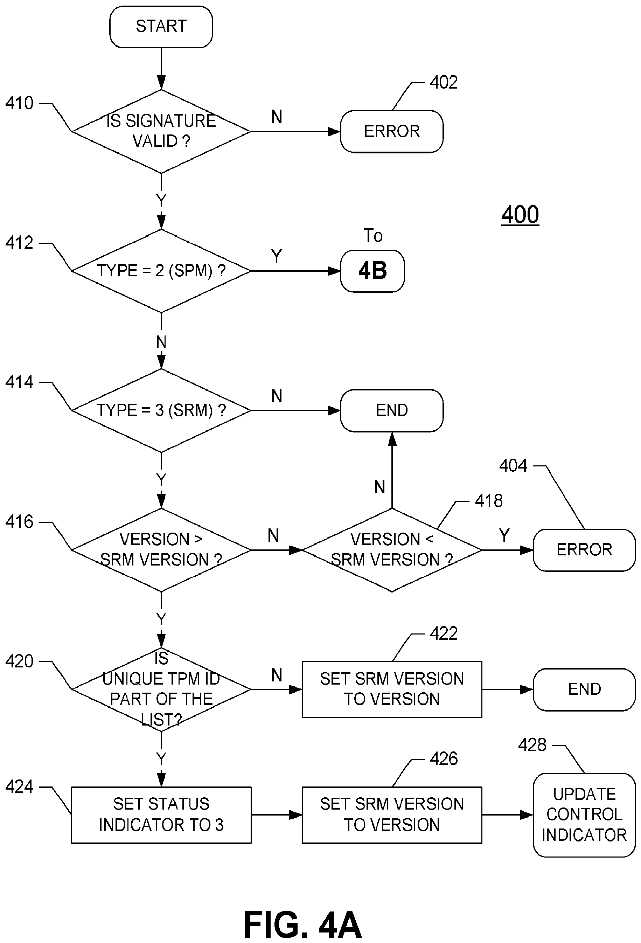

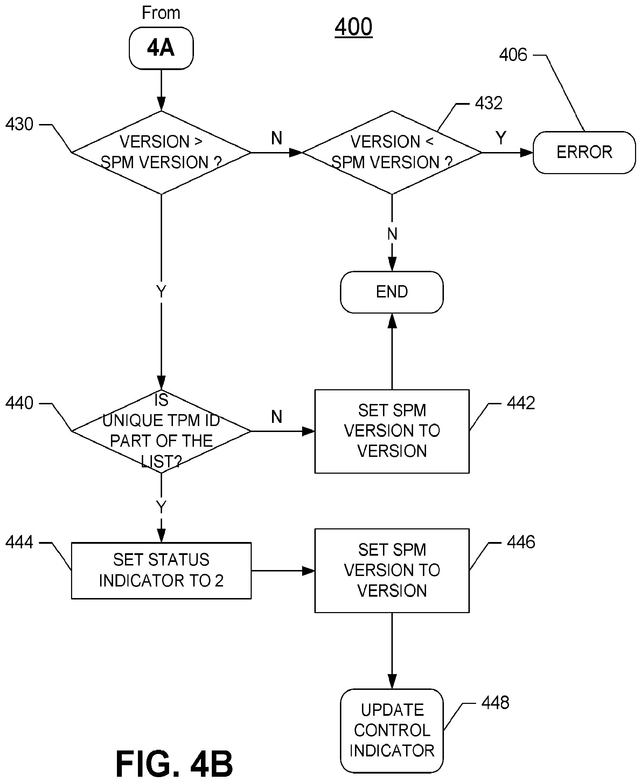

FIGS. 4A and 4B are flow diagrams illustrating a process 400 for handling messages by the renewability control system 240 when the device is in a deprecated mode 120 (i.e., status indicator 270 is equal to 1) in accordance with one implementation of the present disclosure.

In the illustrated embodiment of FIG. 4A, a determination is made, at block 410, whether the signature 286 is valid. In one implementation, the renewability control system 240 verifies the signature 286 by using the public key of the signing key of the licensing authority 264. This verification is a typical digital signature process. If the verification (at block 410) fails, the renewability control system 240 issues an error message (at block 302) and rejects the message. The renewability control system 240 may attempt to reload the message to verify whether there was a transmission error that altered the received message.

Otherwise, if signature 286 is valid, a determination is made, at blocks 412 and 414, of the type 280 of the message. If the message type 280 is determined, at block 412, to be equal to 2 (i.e., the system patched message 252), the process is directed to block 430 of FIG. 4B. Otherwise, if the message type 280 is determined, at block 414, to be equal to 3 (i.e., the system revocation message 256), the message version number 282 is compared to the SRM version number 276, at blocks 416 and 418. If the message version number 282 is determined, at block 416, to be greater than the SRM version number 276, a check is made, at block 420, to determine if the unique TPM ID 214 is in the list of impacted devices with breached TPMs. Otherwise, if the message version number 282 is determined, at block 418, to be less than the current SRM version number 276 stored by the renewability control system 240, then an error message is generated, at block 404, to indicate that the message is obsolete. Further, if the message version number 282 is determined, at block 418, to be equal to the SRM version number 276 (i.e., not greater at 416 and not less at 418), then the process ends.

If the check made at block 420 indicates that the unique TPM ID 214 is not in the list of impacted devices with breached TPMs, then the SRM version number 276 is set to the message version number 282, at block 422, and the process ends. Otherwise, if the check made at block 420 indicates that the unique TPM ID 214 is in the list of impacted devices with breached TPMs, then the status indicator 270 is set to 3, at block 424, the SRM version number 276 is set to the message version number 282, at block 426, and the control indicator 242 is updated, at block 428.

Referring back to block 412, in which the message type 280 is determined to be equal to 2 (i.e., the system patched message 252), the process is directed to block 430 of FIG. 4B. Thus, in the illustrated embodiment of FIG. 4B, a comparison is made, at block 430, whether the message version number 282 is greater than the SPM version number 272. If the message version number 282 is determined, at block 430, to be greater than the SPM version number 272, a check is made, at block 440, to determine if the unique TPM ID 214 is in the list of impacted devices with breached TPMs. Otherwise, if the message version number 282 is determined, at block 432, to be less than the current SPM version number 272 stored by the renewability control system 240, then an error message is generated, at block 406, to indicate that the message is obsolete. Further, if the message version number 282 is determined, at block 432, to be equal to the SPM version number 272 (i.e., not greater at 430 and not less at 432), then the process ends.

If the check made at block 440 indicates that the unique TPM ID 214 is not in the list of impacted devices with breached TPMs, then the SPM version number 272 is set to the message version number 282, at block 442, and the process ends. Otherwise, if the check made at block 440 indicates that the unique TPM ID 214 is in the list of impacted devices with breached TPMs, then the status indicator 270 is set to 2 (i.e., full mode), at block 444, the SPM version number 272 is set to the message version number 282, at block 446, and the control indicator 242 is updated, at block 448.

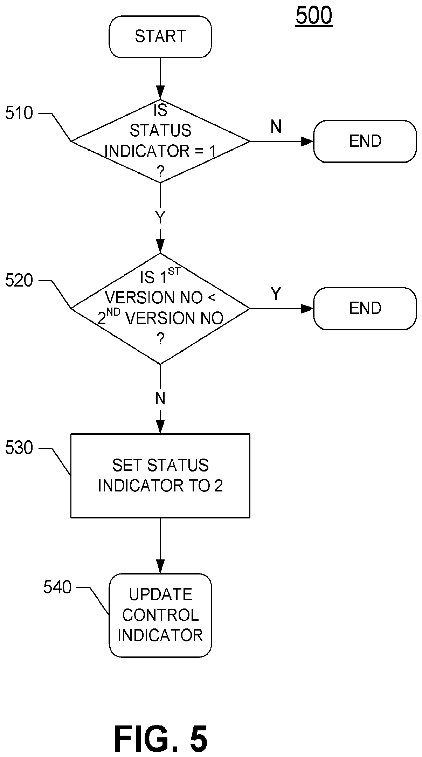

FIG. 5 is a flow diagram 500 illustrating a process 500 for managing status indicator 270 and control indicator 242 by the renewability control system 240 to determine automatic transition to a full mode in accordance with one implementation of the present disclosure. In one implementation, the process 500 is used after the renewability control system 240 retrieves the current version number from the TPM 210. Thus, in one implementation, the process 500 is initiated once the current version number is retrieved from the TPM 210.

In the illustrated embodiment of FIG. 5, a determination is made, at block 510, whether the status indicator 270 is equal to 1 (i.e., in the deprecated mode). If the status indicator is not equal to 1 (i.e., not in the deprecated mode), the process 500 ends. Otherwise, if the status indicator is equal to 1, the current version number is compared, at block 520, to the RCS version number. If the current version number is less than the RCS version number, the process 500 ends. Otherwise, if the current version number is not less than the RCS version number, then the status indicator 270 is set to 2 (i.e., full mode), at block 530, and the control indicator 242 is updated, at block 540.

Referring back, FIG. 2E is a format for the system deprecation message 254, the system patched message 252, and the system revocation message 256 in accordance with an alternative implementation of the present disclosure. In the illustrated implementation of FIG. 2E, the type 290 of the message is a one-byte field that defines the type of message. In one example, the system deprecation message 254 is designated with type 1, the system patched message 252 is designated with type 2, and the system revocation message 256 is designated with type 3. The version 292 of the message is a two-byte field. This incremental value defines the current version of the message. The initial value is set at 1. Then, every time the licensing authority 264 issues a new version of the corresponding type of message, the version 292 is incremented by 1. The patch version 294 is a two-byte field that defines the minimal version of the patched TPM 210. This value is meaningful only when the type 290 is equal to 2 (i.e., for system patched message 252). The length 296 is a three-byte field that defines the number of unique TPM identifier (TPM ID) 214. The signature 298 is the digital signature of all the previous bytes of the message.

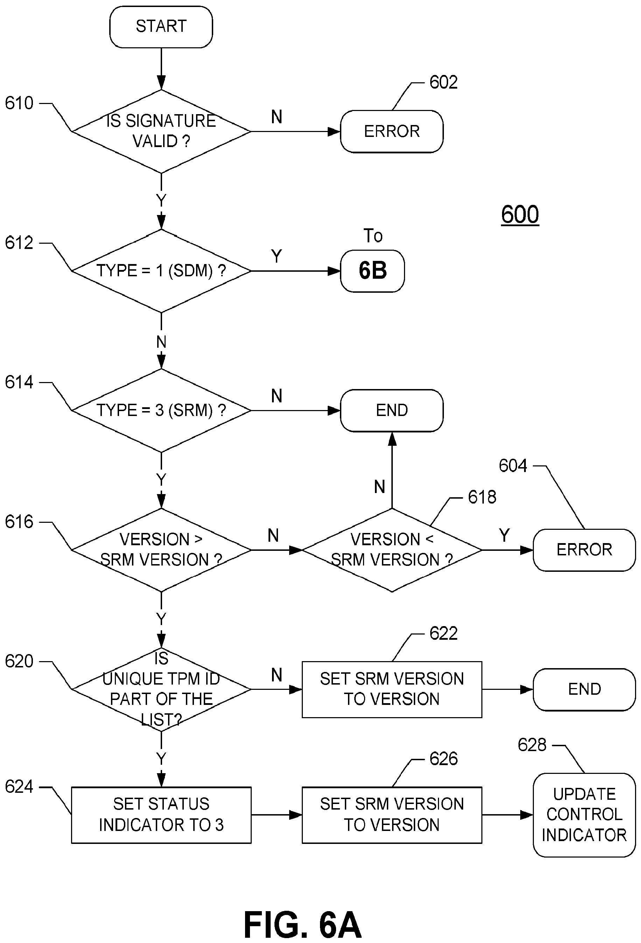

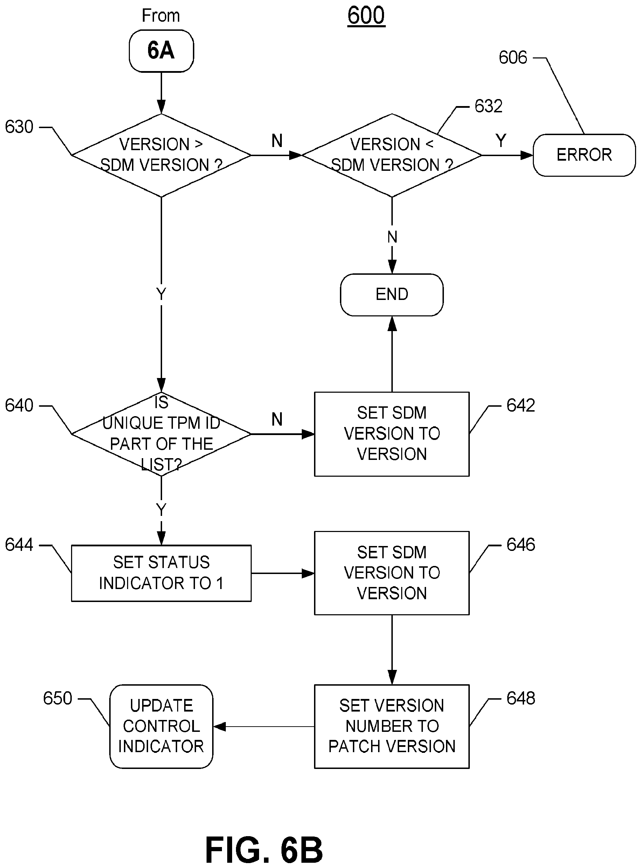

In the alternative implementation described with respect to FIG. 2E, the renewability control system 240 uses an alternative process illustrated in FIGS. 6A and 6B instead of the process 300 illustrated in FIGS. 3A and 3B.

FIGS. 6A and 6B are flow diagrams illustrating a process 600 for handling messages by the renewability control system 240 when the device is in a full mode 110 (i.e., status indicator 270 is equal to 2) in accordance with the alternative implementation of the present disclosure.

In the illustrated embodiment of FIG. 6A, a determination is made, at block 610, whether the signature 298 is valid. If the verification (at block 610) fails, the renewability control system 240 issues an error message (at block 602) and rejects the message. Otherwise, if the signature 298 is valid, a determination is made, at blocks 612 and 614, of the type 290 of the message. If the message type 290 is determined, at block 612, to be equal to 1 (i.e., the system deprecation message 254), the process is directed to block 630 of FIG. 6B. Otherwise, if the message type 290 is determined, at block 614, to be equal to 3 (i.e., the system revocation message 256), the message version number 292 is compared to the SRM version number 276, at blocks 616 and 618. If the message version number 292 is determined to be greater than the SRM version number 276, at block 616, a check is made, at block 620, to determine if the unique TPM ID 214 is in the list of impacted devices with breached TPMs. Otherwise, if the message version number 292 is determined, at block 618, to be less than the current SRM version number 276 stored by the renewability control system 240, then an error message is generated, at block 604, to indicate that the message is obsolete. Further, if the message version number 292 is determined, at block 618, to be equal to the SRM version number 276 (i.e., not greater at 616 and not less at 618), then the process ends.

If the check made at block 620 indicates that the unique TPM ID 214 is not in the list of impacted devices with breached TPMs, then the SRM version number 276 is set to the message version number 292, at block 622, and the process ends. Otherwise, if the check made at block 620 indicates that the unique TPM ID 214 is in the list of impacted devices with breached TPMs, then the status indicator 270 is set to 3, at block 624, the SRM version number 276 is set to the message version number 292, at block 626, and the control indicator 242 is updated, at block 628. As stated above, in one implementation, the value of the control indicator 242 tracks the value of the status indicator 270.

Referring back to block 612, in which the message type 290 is determined to be equal to 1 (i.e., the system deprecation message 254), the process is directed to block 630 of FIG. 6B. Thus, in the illustrated embodiment of FIG. 6B, a comparison is made, at block 630, whether the message version number 292 is greater than the SDM version number 274. If the message version number 292 is determined to be greater than the SDM version number 274, at block 630, a check is made, at block 640, to determine if the unique TPM ID 214 is in the list of impacted devices with breached TPMs. Otherwise, if the message version number 292 is determined, at block 632, to be less than the current SDM version number 274 stored by the renewability control system 240, then an error message is generated, at block 606, to indicate that the message is obsolete. Further, if the message version number 292 is determined, at block 632, to be equal to the SDM version number 274 (i.e., not greater at 630 and not less at 632), then the process ends.

If the check made at block 640 indicates that the unique TPM ID 214 is not in the list of impacted devices with breached TPMs, then the SDM version number 274 is set to the message version number 292, at block 642, and the process ends. Otherwise, if the check made at block 640 indicates that the unique TPM ID 214 is in the list of impacted devices with breached TPMs, then the status indicator 270 is set to 1 (i.e., deprecated mode), at block 644, the SDM version number 276 is set to the message version number 292, at block 646, the message version number 292 is set to the patch version number 294, at block 648, and the control indicator 242 is updated, at block 650.

One implementation of the above-described content playback device using managed transitions between modes includes one or more programmable processors and corresponding computer system components to store and execute computer instructions, such as to provide the content processing and state management to control the mode operation of the device.

The foregoing methods and apparatus are susceptible to many variations. For example, although the specification describes managing a content playback device having three operating modes (i.e., full, deprecated, and revoked modes), more or less number of operating modes can be used. Additionally, for clear and brief description, many descriptions of the methods and apparatus have been simplified. Many descriptions use terminology and structures of specific standards. However, the disclosed methods and apparatus are more broadly applicable.

Those of skill in the art will appreciate that the various illustrative logical blocks, modules, units, and algorithm steps described in connection with the implementations disclosed herein can often be implemented as electronic hardware, computer software, or combinations of both. To clearly illustrate this interchangeability of hardware and software, various illustrative components, blocks, units, and steps have been described above generally in terms of their functionality. Whether such functionality is implemented as hardware or software depends upon the particular constraints imposed on the overall system. Skilled persons can implement the described functionality in varying ways for each particular system, but such implementation decisions should not be interpreted as causing a departure from the scope of the disclosure. In addition, the grouping of functions within a unit, module, block, or step is for ease of description. Specific functions or steps can be moved from one unit, module, or block without departing from the disclosure.

The above description of the disclosed implementations is provided to enable any person skilled in the art to make or use the disclosure. Various modifications to these implementations will be readily apparent to those skilled in the art. Accordingly, the techniques are not limited to the specific examples described above. Thus, it is to be understood that the description and drawings presented herein represent a presently possible implementation of the disclosure and are therefore representative of the subject matter that is broadly contemplated by the present disclosure. It is further understood that the scope of the present disclosure fully encompasses other implementations that may become obvious to those skilled in the art and that the scope of the present disclosure is accordingly limited by nothing other than the appended claims.

## Claims

1. A method performed by a content playback device (200) for managing modes of the content playback device (200) for playing back content, the method comprising:
receiving, from a licensing authority (264), at least one of
a system deprecation message (254) including a system deprecation message, SDM, version number used to transition the content playback device (200) from a full mode (110) to a deprecated mode (120) and including a list of impacted devices with breached technical protection measures, TPMs;
a system patched message (252) including a system patched message, SPM, version number used to transition the content playback device (200) from the deprecated mode (120) to the full mode (110); and
a system revocation message (256) including a system revocation message, SRM, version number used to transition the content playback device (200) from the deprecated mode (120) or the full mode (110) to a revoked mode (130); wherein
when the system deprecation message (254) is received, the method comprises determining, by a renewability control system, RCS (240), of the content playback device (200), that a TPM identifier (214) that identifies an instance of a TPM (210) in the content playback device (200) is in the list of impacted devices with breached TPMs;
determining, by the RCS (240), that the SDM version number in the system deprecation message (254) is greater than a current SDM version number stored in the RCS (240), and in response, transitioning the content playback device (200) from the full mode (110) to the deprecated mode (120) and updating the current SDM version number stored in the RCS (240) to the SDM version number in the system deprecation message (254);
when the system patched message (252) is received, the method comprises
determining, by the RCS (240), that the SPM version number in the system patched message (252) is greater than a current SPM version number stored in the RCS (240) and, in response, transitioning the content playback device (200) from the deprecated mode (120) to the full mode (110) and updating the current SPM version number stored in the RCS (240) to the SPM version number in the system patched message (254); and
when the system revocation message (256) is received, the method comprises
determining, by the RCS (240), that the SRM version number in the system revocation message (246) is greater than a current SRM version number stored in the RCS (240) and, in response, transitioning the content playback device (200) from the deprecated mode (120) or the full mode (110) to the revoked mode (130) and updating the current SRM version number stored in the RCS (240) to the SRM version number in the system revocation message (254); and the method comprises
receiving, from a content server (262), compressed content (202), and
when the content playback device (200) is in the full mode (110), decompressing and rendering the compressed content (202) received from the content server (262) to produce rendered content (232),
when the content playback device (200) is in the deprecated mode (120), downconverting the compressed content (202) received from the content server (262) to produce down-converted content (222), and decompressing and rendering said down-converted content (202) to produce a down-converted version of the rendered content (232), a quality of the down-converted version of the rendered content (232) when the content playback device (200) is in the deprecated mode (120) being lower than a quality of the rendered content (232) when the content playback device (200) is in the full mode (110), and
when the content playback device (200) is in the revoked mode (130), rendering no content.

2. The method of claim 1, wherein the down-converted version of the rendered content (232) rendered when the content playback device is in the deprecated mode (120), has a lower resolution than the rendered content (232) rendered when the content playback device is in the full mode (110).

3. The method of claim 1, wherein the down-converted version of the rendered content (232) rendered when the content playback device is in the deprecated mode (120) has a lower dynamic range than the rendered content (232) rendered when the content playback device is in the full mode (110).

4. The method of claim 1, wherein the down-converted version of the rendered content (232) rendered when the content playback device is in the deprecated mode (120) has more advertisements than the rendered content (232) rendered when the content playback device is in the full mode (110).

5. The method of claim 1, wherein each of the list of impacted devices with the breached TPMs includes a specific content playback device with a breached TPM.

6. The method of claim 1, wherein each of the list of impacted devices with the breached TPMs includes a specific type of devices with at least one of the devices having a breached TPM.

7. The method of claim 1, wherein each of the list of impacted devices with the breached TPMs includes one of a specific content playback device with a breached TPM or a specific type of devices with at least one of the devices having a breached TPM.

8. An content playback device (200) for outputting content according to modes, the content playback device (200) comprising:
a protection measurement unit (210) configured to receive compressed content (202) from a content server (262);
a downconverter (220) configured to down-convert the compressed content (202) received from the content server (262) to produce down-converted content (222) when content playback device (200) is in a deprecated mode (120);
a renewability control system, RCS, (240) configured to:
receive, from a licensing authority (264),
a system deprecation message (254) including a system deprecation message, SDM, version number used to transition the content playback device (200) from a full mode (110) to the deprecated mode (120) and including a list of impacted devices with breached technical protection measures, TPMs;
a system patched message (252) including a system patched message, SPM, version number used to transition the content playback device (200) from the deprecated mode (120) to the full mode (110), and
a system revocation message (256) including a system revocation message, SRM, version number used to transition the content playback device (200) from the deprecated mode (120) or the full mode (110) to a revoked mode (130);
determine that a TPM identifier (214) that identifies an instance of a TPM (210) in the content playback device (200) is in the list of devices with breached TPMs;
determine that the SDM version number of the system deprecation message (254) is greater than a current SDM version number stored in the RCS (240), and in response, transition the content playback device (200) from the full mode (110) to the deprecated mode (120) and update the current SDM version number stored in the RCS (240) to the SDM version number of the system deprecation message (254);
determine that the SPM version number in the system patched message (252) is greater than a current SPM version number stored in the RCS (240) and, in response, transition the content playback device (200) from the deprecated mode (120) to the full mode (110) and update the current SPM version number stored in the RCS (240) to the SPM version number in the system patched message (254);
determine that the SRM version number in the revocation message (246) is greater than a current SRM version number stored in the RCS (240) and, in response, transition the content playback device (200) from the deprecated mode (120) or the full mode (110) to the revoked mode (130) and update the current SRM version number stored in the RCS (240) to the SRM version number in the system revocation message (254); and
a video renderer (230) configured to:
when the content playback device (200) is in the full mode (110), decompress and render the compressed content (202) received from the content server (262) to produce rendered content (232),
when the content playback device (200) is in the deprecated mode (120), decompress and render the down-converted content (222) to produce a down-converted version of the rendered content (232), a quality of the down-converted version of the rendered content (232) rendered when the content playback device (200) is in the deprecated mode (120) being lower than a quality of the rendered content (232) rendered when the content playback device (200) is in the full mode (110), and
when the content playback device (200) is in the revoked mode (130), render no content.

9. The content playback device (200) according to claim 8, wherein the down-converted version of the rendered content (232) rendered when the content playback device (200) is in the deprecated mode (120), has a lower resolution than the rendered content (232) rendered when the content playback device (200) is in the full mode (110).

10. The content playback device (200) according to claim 8, wherein the down-converted version of the rendered content (232) rendered when the content playback device (200) is in the deprecated mode (120) has a lower dynamic range than the rendered content (232) rendered when the content playback device (200) is in the full mode (110).

11. The content playback device (200) according to claim 8, wherein the down-converted version of the rendered content (232) rendered when the content playback device (200) is in the deprecated mode (120) has more advertisements than the rendered content (232) rendered when the content playback device (200) is in the full mode (110).

## Patentansprüche

1. Verfahren, das durch eine Inhaltswiedergabevorrichtung (200) durchgeführt wird, zum Verwalten von Modi der Inhaltswiedergabevorrichtung (200) zum Wiedergeben von Inhalt, das Verfahren umfassend:
Empfangen, von einer Lizenzierungsbehörde (264), von mindestens einer Systemmissbilligungsnachricht (254), einschließlich einer Versionsnummer der Systemmissbilligungsnachricht, SDM, die verwendet wird, um die Inhaltswiedergabevorrichtung (200) von einem Vollmodus (110) in einen missbilligten Modus (120) zu überführen, und einschließlich einer Liste von betroffenen Vorrichtungen mit verletzten technischen Schutzmaßnahmen, TPMs;
eine System-Patch-Nachricht (252), einschließlich einer Versionsnummer der System-Patch-Nachricht, SPM, die verwendet wird, um die Inhaltswiedergabevorrichtung (200) vom missbilligten Modus (120) in den Vollmodus (110) zu überführen; und
eine Systemlizenzentzugsnachricht (256), einschließlich einer Versionsnummer für die Systemlizenzentzugsnachricht, SRM, die verwendet wird, um die Inhaltswiedergabevorrichtung (200) von dem missbilligten Modus (120) oder dem Vollmodus (110) in einen widerrufenen Modus (130) zu überführen; wobei
wenn die Systemmissbilligungsnachricht (254) empfangen wird, das Verfahren das Bestimmen durch ein Erneuerbarkeitskontrollsystem, RCS (240) der Inhaltswiedergabevorrichtung (200), dass eine TPM-Kennung (214), die eine Instanz eines TPM (210) in der Inhaltswiedergabevorrichtung (200) identifiziert, in der Liste von betroffenen Vorrichtungen mit verletzten TPMs ist, umfasst;
Bestimmen, durch das RCS (240), dass die SDM-Versionsnummer in der Systemmissbilligungsnachricht (254) größer als eine aktuelle SDM-Versionsnummer ist, die in dem RCS (240) gespeichert ist, und als Reaktion darauf, Überführen der Inhaltswiedergabevorrichtung (200) von dem Vollmodus (110) in den missbilligten Modus (120) und Aktualisieren der aktuellen SDM-Versionsnummer, die in dem RCS (240) gespeichert ist, auf die SDM-Versionsnummer in der Systemmissbilligungsnachricht (254);
wenn die System-Patch-Nachricht (252) empfangen wird, das Verfahren ein Bestimmen durch das RCS (240), dass die SPM-Versionsnummer in der System-Patch-Nachricht (252) größer als eine aktuelle SPM-Versionsnummer ist, die in dem RCS (240) gespeichert ist, und, als Reaktion darauf, das Überführen der Inhaltswiedergabevorrichtung (200) von dem missbilligten Modus (120) in den Vollmodus (110) und das Aktualisieren der aktuellen SPM-Versionsnummer, die in dem RCS (240) gespeichert ist, auf die SPM-Versionsnummer in der System-Patch-Nachricht (254), umfasst; und
wenn die Systemlizenzentzugsnachricht (256) empfangen wird, das Verfahren das Bestimmen durch das RCS (240), dass die SRM-Versionsnummer in der Systemsperrnachricht (246) größer als eine aktuelle SRM-Versionsnummer ist, die in dem RCS (240) gespeichert ist, und, als Reaktion darauf, das Überführen der Inhaltswiedergabevorrichtung (200) von dem missbilligten Modus (120) oder von dem Vollmodus (110) in den widerrufenen Modus (130) und das Aktualisieren der aktuellen SRM-Versionsnummer, die in dem RCS (240) gespeichert ist, auf die SRM-Versionsnummer in der Systemlizenzentzugsnachricht (254), umfasst; und das Verfahren das Empfangen, von einem Inhaltsserver (262), von komprimiertem Inhalt (202) umfasst, und
wenn die Inhaltswiedergabevorrichtung (200) in dem Vollmodus (110) ist, Dekomprimieren und Rendern des komprimierten Inhalts (202), der von dem Inhaltsserver (262) empfangen wurde, um gerenderten Inhalt (232) herzustellen,
wenn die Inhaltswiedergabevorrichtung (200) in dem missbilligten Modus (120) ist, Herunterkonvertieren des komprimierten Inhalts (202), der von dem Inhaltsserver (262) empfangen wird, um herunterkonvertierten Inhalt (222) zu erzeugen, und Dekomprimieren und Rendern des herunterkonvertierten Inhalts (202), um eine herunterkonvertierte Version des gerenderten Inhalts (232) herzustellen, wobei eine Qualität der herunterkonvertierten Version des gerenderten Inhalts (232), wenn die Inhaltswiedergabevorrichtung (200) in dem missbilligten Modus (120) ist, niedriger als eine Qualität des gerenderten Inhalts (232) ist, wenn die Inhaltswiedergabevorrichtung (200) in dem Vollmodus (110) ist, und
wenn die Inhaltswiedergabevorrichtung (200) in dem widerrufenen Modus (130) ist, wird kein Inhalt wiedergegeben.

2. Verfahren nach Anspruch 1, wobei die herunterkonvertierte Version des gerenderten Inhalts (232), der gerendert wird, wenn die Inhaltswiedergabevorrichtung in dem missbilligten Modus (120) ist, eine niedrigere Auflösung als der gerenderte Inhalt (232) aufweist, der gerendert wird, wenn die Inhaltswiedergabevorrichtung in dem Vollmodus (110) ist.

3. Verfahren nach Anspruch 1, wobei die herunterkonvertierte Version des gerenderten Inhalts (232), der gerendert wird, wenn die Inhaltswiedergabevorrichtung in dem missbilligten Modus (120) ist, einen niedrigeren Dynamikbereich als der gerenderte Inhalt (232) aufweist, der gerendert wird, wenn die Inhaltswiedergabevorrichtung in dem Vollmodus (110) ist.

4. Verfahren nach Anspruch 1, wobei die herunterkonvertierte Version des gerenderten Inhalts (232), der gerendert wird, wenn die Inhaltswiedergabevorrichtung in dem missbilligten Modus (120) ist, mehr Werbung als der gerenderte Inhalt (232) aufweist, der gerendert wird, wenn die Inhaltswiedergabevorrichtung in dem Vollmodus (110) ist.

5. Verfahren nach Anspruch 1, wobei jede der Liste von betroffenen Vorrichtungen mit den verletzten TPMs eine spezifische Inhaltswiedergabevorrichtung mit einer verletzten TPM einschließt.

6. Verfahren nach Anspruch 1, wobei jede der Liste von betroffenen Vorrichtungen mit den verletzten TPMs eine spezifische Vorrichtungsart einschließt, wobei mindestens eine der Vorrichtungen eine verletzte TPM aufweist.

7. Verfahren nach Anspruch 1, wobei jede der Liste von betroffenen Vorrichtungen mit den verletzten TPMs eine spezifische Inhaltswiedergabevorrichtung mit einer verletzten TPM oder eine spezifische Vorrichtungsart mit einschließt, wobei mindestens eine der Vorrichtungen eine verletzte TPM aufweist.

8. Inhaltswiedergabevorrichtung (200) zum Ausgeben von Inhalt gemäß Modi, die Inhaltswiedergabevorrichtung (200) umfassend:
eine Schutzmesseinheit (210), die konfiguriert ist, um komprimierten Inhalt (202) von einem Inhaltsserver (262) zu empfangen;
einen Abwärtskonverter (220), der konfiguriert ist, um den komprimierten Inhalt (202), der von dem Inhaltsserver (262) empfangen wird, abwärtszukonvertieren, um abwärtskonvertierten Inhalt (222) herzustellen, wenn die Inhaltswiedergabevorrichtung (200) in einem missbilligten Modus (120) ist;
ein Erneuerbarkeitskontrollsystem, RCS, (240), das konfiguriert ist zum:
Empfangen, von einer Genehmigungsbehörde (264),
einer Systemmissbilligungsnachricht (254), einschließlich einer Versionsnummer der Systemmissbilligungsnachricht, SDM, die verwendet wird, um die Inhaltswiedergabevorrichtung (200) von einem Vollmodus (110) in den missbilligten Modus (120) zu überführen, und einschließlich einer Liste von betroffenen Vorrichtungen mit verletzten technischen Schutzmaßnahmen, TPMs;
einer System-Patch-Nachricht (252), einschließlich einer Versionsnummer der System-Patch-Nachricht, SPM, die verwendet wird, um die Inhaltswiedergabevorrichtung (200) vom missbilligten Modus (120) in den Vollmodus (110) zu überführen; und
einer Systemlizenzentzugsnachricht (256), einschließlich einer Versionsnummer für die Systemlizenzentzugsnachricht, SRM, die verwendet wird, um die Inhaltswiedergabevorrichtung (200) von dem missbilligten Modus (120) oder dem Vollmodus (110) in einen gesperrten Modus (130) zu überführen;
Bestimmen, dass eine TPM-Kennung (214), die eine Instanz einer TPM (210) in der Inhaltswiedergabevorrichtung (200) identifiziert, in der Liste der Vorrichtungen mit verletzten TPMs enthalten ist;
Bestimmen, dass die SDM-Versionsnummer der Systemmissbilligungsnachricht (254) größer als eine aktuelle SDM-Versionsnummer ist, die in dem RCS (240) gespeichert ist, und als Reaktion darauf, Überführen der Inhaltswiedergabevorrichtung (200) von dem Vollmodus (110) in den missbilligten Modus (120) und Aktualisieren der SDM-Versionsnummer, die in dem RCS (240) gespeichert ist, auf die SDM-Versionsnummer der Systemmissbilligungsnachricht (254);
Bestimmen, dass die SPM-Versionsnummer in der System-Patch-Nachricht (252) größer als eine aktuelle SPM-Versionsnummer ist, die in dem RCS (240) gespeichert ist, und als Reaktion darauf, Überführen der Inhaltswiedergabevorrichtung (200) von dem missbilligten Modus (120) in den Vollmodus (110) und Aktualisieren der aktuellen SPM-Versionsnummer, die in dem RCS (240) gespeichert ist, auf die SPM-Versionsnummer in der System-Patch-Nachricht (254);
Bestimmen, dass die SRM-Versionsnummer in der Lizenzentzugsnachricht (246) größer als eine aktuelle SRM-Versionsnummer ist, die in dem RCS (240) gespeichert ist, und als Reaktion darauf, Überführen der Inhaltswiedergabevorrichtung (200) von dem missbilligten Modus (120) oder von dem Vollmodus (110) in den widerrufenen Modus (130) und Aktualisieren der aktuellen SRM-Versionsnummer, die in dem RCS (240) gespeichert ist, auf die SRM-Versionsnummer in der Systemlizenzentzugsnachricht (254), umfasst; und
einen Video-Renderer (230), der konfiguriert ist zum:
wenn die Inhaltswiedergabevorrichtung (200) in dem Vollmodus (110) ist, Dekomprimieren und Rendern des komprimierten Inhalts (202), der von dem Inhaltsserver (262) empfangen wird, um gerenderten Inhalt (232) herzustellen,
wenn die Inhaltswiedergabevorrichtung (200) in dem missbilligten Modus (120) ist, Dekomprimieren und Rendern des herunterkonvertierten Inhalts (222), um eine herunterkonvertierte Version des gerenderten Inhalts (232) herzustellen, wobei eine Qualität der herunterkonvertierten Version des gerenderten Inhalts (232), der gerendert wird, wenn die Inhaltswiedergabevorrichtung (200) in dem missbilligten Modus (120) ist, niedriger als eine Qualität des gerenderten Inhalts (232) ist, der gerendert wird, wenn die Inhaltswiedergabevorrichtung (200) in dem Vollmodus (110) ist, und
wenn die Inhaltswiedergabevorrichtung (200) in dem widerrufenen Modus (130) ist, wird kein Inhalt wiedergegeben.

9. Inhaltswiedergabevorrichtung (200) nach Anspruch 8, wobei die herunterkonvertierte Version des gerenderten Inhalts (232), der gerendert wird, wenn die Inhaltswiedergabevorrichtung (200) in dem missbilligten Modus (120) ist, eine niedrigere Auflösung als der gerenderte Inhalt (232) aufweist, der gerendert wird, wenn die Inhaltswiedergabevorrichtung (200) in dem Vollmodus (110) ist.

10. Inhaltswiedergabevorrichtung (200) nach Anspruch 8, wobei die herunterkonvertierte Version des gerenderten Inhalts (232), der gerendert wird, wenn die Inhaltswiedergabevorrichtung (200) in dem missbilligten Modus (120) ist, einen niedrigeren Dynamikbereich als der gerenderte Inhalt (232) aufweist, der gerendert wird, wenn die Inhaltswiedergabevorrichtung (200) in dem Vollmodus (110) ist.

11. Inhaltswiedergabevorrichtung (200) nach Anspruch 8, wobei die herunterkonvertierte Version des gerenderten Inhalts (232), der gerendert wird, wenn die Inhaltswiedergabevorrichtung (200) in dem missbilligten Modus (120) ist, mehr Werbung als der gerenderte Inhalt (232) aufweist, der gerendert wird, wenn die Inhaltswiedergabevorrichtung (200) in dem Vollmodus (110) ist.

## Revendications

1. Procédé effectué par un dispositif de lecture de contenu (200) permettant de gérer des modes du dispositif de lecture de contenu (200) pour la lecture de contenu, le procédé comprenant :
la réception, en provenance d'une autorité de délivrance de licence (264), d'au moins un parmi un message de dépréciation de système (254) comportant un numéro de version de message de dépréciation de système, SDM, utilisé pour faire passer le dispositif de lecture de contenu (200) d'un mode complet (110) à un mode déprécié (120) et comportant une liste de dispositifs affectés dont des mesures de protection technique, TPM, ont été enfreintes ;
un message de correction de système (252) comportant un numéro de version de message de correction de système, SPM, utilisé pour faire passer le dispositif de lecture de contenu (200) du mode déprécié (120) au mode complet (110) ; et
un message de révocation de système (256) comportant un numéro de version de message de révocation de système, SRM, utilisé pour faire passer le dispositif de lecture de contenu (200) du mode déprécié (120) ou du mode complet (110) à un mode révoqué (130) ; dans lequel
lorsque le message de dépréciation de système (254) est reçu, le procédé comprend la détermination, par un système de commande de renouvelabilité, RCS (240), du dispositif de lecture de contenu (200), du fait qu'un identifiant de TPM (214) qui identifie une instance d'une TPM (210) dans le dispositif de lecture de contenu (200) se trouve dans la liste de dispositifs affectés dont des TPM ont été enfreintes ;
la détermination, par le RCS (240), du fait que le numéro de version de SDM dans le message de dépréciation de système (254) est supérieur à un numéro de version de SDM actuel stocké dans le RCS (240) et, en réponse, la transition du dispositif de lecture de contenu (200) du mode complet (110) au mode déprécié (120) et la mise à jour du numéro de version de SDM actuel stocké dans le RCS (240) avec le numéro de version de SDM dans le message de dépréciation de système (254) ;
lorsque le message de correction de système (252) est reçu, le procédé comprend la détermination, par le RCS (240), du fait que le numéro de version de SPM dans le message de correction de système (252) est supérieur à un numéro de version de SPM actuel stocké dans le RCS (240) et, en réponse, la transition du dispositif de lecture de contenu (200) du mode déprécié (120) au mode complet (110) et la mise à jour du numéro de version de SPM actuel stocké dans le RCS (240) avec le numéro de version de SPM dans le message de correction de système (254) ; et
lorsque le message de révocation de système (256) est reçu, le procédé comprend la détermination, par le RCS (240), du fait que le numéro de version de SRM dans le message de révocation de système (246) est supérieur à un numéro de version de SRM actuel stocké dans le RCS (240) et, en réponse, la transition du dispositif de lecture de contenu (200) du mode déprécié (120) ou du mode complet (110) au mode révoqué (130) et la mise à jour du numéro de version de SRM actuel stocké dans le RCS (240) avec le numéro de version de SRM dans le message de révocation de système (254) ; et le procédé comprend la réception, en provenance d'un serveur de contenu (262), d'un contenu compressé (202), et
lorsque le dispositif de lecture de contenu (200) est en mode complet (110), la décompression et la restitution du contenu compressé (202) reçu en provenance du serveur de contenu (262) pour produire un contenu restitué (232),
lorsque le dispositif de lecture de contenu (200) est en mode déprécié (120), la conversion avec abaissement du contenu compressé (202) reçu en provenance du serveur de contenu (262) pour produire un contenu converti avec abaissement (222), et la décompression et la restitution dudit contenu converti avec abaissement (202) pour produire une version convertie avec abaissement du contenu restitué (232), une qualité de la version convertie avec abaissement du contenu restitué (232) lorsque le dispositif de lecture de contenu (200) est en mode déprécié (120) étant inférieure à une qualité du contenu restitué (232) lorsque le dispositif de lecture de contenu (200) est en mode complet (110), et
lorsque le dispositif de lecture de contenu (200) est en mode révoqué (130), aucune restitution de contenu.

2. Procédé selon la revendication 1, dans lequel la version convertie avec abaissement du contenu restitué (232) restitué lorsque le dispositif de lecture de contenu est en mode déprécié (120), a une résolution inférieure au contenu restitué (232) restitué lorsque le dispositif de lecture de contenu est en mode complet (110).

3. Procédé selon la revendication 1, dans lequel la version convertie avec abaissement du contenu restitué (232) restitué lorsque le dispositif de lecture de contenu est en mode déprécié (120) a une plage dynamique inférieure au contenu restitué (232) restitué lorsque le dispositif de lecture de contenu est en mode complet (110).

4. Procédé selon la revendication 1, dans lequel la version convertie avec abaissement du contenu restitué (232) restitué lorsque le dispositif de lecture de contenu est en mode déprécié (120) a davantage de publicités que le contenu restitué (232) restitué lorsque le dispositif de lecture de contenu est en mode complet (110).

5. Procédé selon la revendication 1, dans lequel chacun de la liste de dispositifs affectés dont des TPM ont été enfreintes comporte un dispositif de lecture de contenu spécifique dont une TPM a été enfreinte.

6. Procédé selon la revendication 1, dans lequel chacun de la liste de dispositifs affectés dont des TPM ont été enfreintes comporte un type spécifique de dispositifs dont au moins l'un des dispositifs présente une TPM qui a été enfreinte.

7. Procédé selon la revendication 1, dans lequel chacun de la liste de dispositifs affectés dont des TPM ont été enfreintes comporte l'un parmi un dispositif de lecture de contenu spécifique dont une TPM a été enfreinte ou un type spécifique de dispositifs dont au moins l'un des dispositifs présente une TPM qui a été enfreinte.

8. Dispositif de lecture de contenu (200) permettant de produire un contenu selon des modes, le dispositif de lecture de contenu (200) comprenant :
une unité de mesure de protection (210) configurée pour recevoir un contenu compressé (202) en provenance d'un serveur de contenu (262) ;
un convertisseur-abaisseur (220) configuré pour convertir avec abaissement le contenu compressé (202) reçu en provenance du serveur de contenu (262) pour produire un contenu converti avec abaissement (222) lorsque le dispositif de lecture de contenu (200) est en mode déprécié (120) ;
un système de commande de renouvelabilité, RCS, (240) configuré pour :
recevoir, en provenance d'une autorité de délivrance de licence (264),
un message de dépréciation de système (254) comportant un numéro de version de message de dépréciation de système, SDM, utilisé pour faire passer le dispositif de lecture de contenu (200) d'un mode complet (110) au mode déprécié (120) et comportant une liste de dispositifs affectés dont des mesures de protection technique, TPM, ont été enfreintes ;
un message de correction de système (252) comprenant un numéro de version de message de correction de système, SPM, utilisé pour faire passer le dispositif de lecture de contenu (200) du mode déprécié (120) au mode complet (110), et
un message de révocation de système (256) comportant un numéro de version de message de révocation de système, SRM, utilisé pour faire passer le dispositif de lecture de contenu (200) du mode déprécié (120) ou du mode complet (110) à un mode révoqué (130) ;
déterminer qu'un identifiant de TPM (214) qui identifie qu'une instance d'une TPM (210) dans le dispositif de lecture de contenu (200) se trouve dans la liste de dispositifs dont des TPM ont été enfreintes ;
déterminer que le numéro de version de SDM du message de dépréciation de système (254) est supérieur à un numéro de version de SDM actuel stocké dans le RCS (240) et, en réponse, faire passer le dispositif de lecture de contenu (200) du mode complet (110) au mode déprécié (120) et mettre à jour le numéro de version de SDM actuel stocké dans le RCS (240) avec le numéro de version de SDM du message de dépréciation de système (254) ;
déterminer que le numéro de version de SPM dans le message de correction de système (252) est supérieur à un numéro de version de SPM actuel stocké dans le RCS (240) et, en réponse, faire passer le dispositif de lecture de contenu (200) du mode déprécié (120) au mode complet (110) et mettre à jour le numéro de version de SPM actuel stocké dans le RCS (240) avec le numéro de version de SPM dans le message de correction de système (254) ;
déterminer que le numéro de version de SRM dans le message de révocation (246) est supérieur à un numéro de version de SRM actuel stocké dans le RCS (240) et, en réponse, faire passer le dispositif de lecture de contenu (200) du mode déprécié (120) ou du mode complet (110) au mode révoqué (130) et mettre à jour le numéro de version de SRM actuel stocké dans le RCS (240) avec le numéro de version de SRM dans le message de révocation de système (254) ; et
un moteur de restitution vidéo (230) configuré pour :
lorsque le dispositif de lecture de contenu (200) est en mode complet (110), décompresser et restituer le contenu compressé (202) reçu en provenance du serveur de contenu (262) pour produire un contenu restitué (232),
lorsque le dispositif de lecture de contenu (200) est en mode déprécié (120), décompresser et restituer le contenu converti avec abaissement (222) pour produire une version convertie avec abaissement du contenu restitué (232), une qualité de la version convertie avec abaissement du contenu restitué (232) restitué lorsque le dispositif de lecture de contenu (200) est en mode déprécié (120) étant inférieure à une qualité du contenu restitué (232) restitué lorsque le dispositif de lecture de contenu (200) est en mode complet (110), et
lorsque le dispositif de lecture de contenu (200) est en mode révoqué (130), ne restituer aucun contenu.

9. Dispositif de lecture de contenu (200) selon la revendication 8, dans lequel la version convertie avec abaissement du contenu restitué (232) restitué lorsque le dispositif de lecture de contenu (200) est en mode déprécié (120), a une résolution inférieure au contenu restitué (232) restitué lorsque le dispositif de lecture de contenu (200) est en mode complet (110).

10. Dispositif de lecture de contenu (200) selon la revendication 8, dans lequel la version convertie avec abaissement du contenu restitué (232) restitué lorsque le dispositif de lecture de contenu (200) est en mode déprécié (120) a une plage dynamique inférieure au contenu restitué (232) restitué lorsque le dispositif de lecture de contenu (200) est en mode complet (110).

11. Dispositif de lecture de contenu (200) selon la revendication 8, dans lequel la version convertie avec abaissement du contenu restitué (232) restitué lorsque le dispositif de lecture de contenu (200) est en mode déprécié (120) a davantage de publicités que le contenu restitué (232) restitué lorsque le dispositif de lecture de contenu (200) est en mode complet (110).
